# EUROPÄISCHE PATENTSCHRIFT

(11) **EP 0 490 174 B1**
(45) Veröffentlichungstag und Bekanntmachung des Hinweises auf die Patenterteilung: **25.01.1995**
(21) Anmeldenummer: 91120350.3
(22) Anmeldetag: 28.11.1991
(51) Int. Cl.: B65G 53/66

(54) **Verfahren zur Förderung von Schüttgut und Vorrichtung zur Durchführung des Verfahrens**
Method for conveying bulk material and device for implementing the method
Procédé pour le transport de matière en vrac et dispositif pour la mise en oeuvre du procédé

(30) Priorität: 11.12.1990 DE 4039496
(43) Veröffentlichungstag der Anmeldung: 17.06.1992
(73) Patentinhaber: BUEHLER AG, 9240 Uzwil (CH)
(72) Erfinder: Bohm, Arturo, CH-9242 Oberuzwil (CH)
(74) Vertreter: Révy von Belvárd, Peter

(56) Entgegenhaltungen:
- DE-A- 1 950 055
- DE-A- 2 853 106
- GB-A- 1 066 152
- US-A- 4 059 310

## Beschreibung

Die Erfindung betrifft ein Verfahren zur Förderung von Schüttgütern nach dem Oberbegriff des Anspruches 1 sowie eine Vorrichtung zur Durchführung) des Verfahrens.

Bei der Förderung von Schüttgütern kommen Zellenradschleusen, beispielsweise an Siloausläufen, zum Einsatz; sie dienen als Dosierund Förderorgane für Schüttgüter aller Art. Zur Vermeidung von Leckverlusten werden die Zellenradschleusen sowohl an den beidseitig zwischen den Rotorseitenscheiben und dem Gehäuse gebildeten Ringspalten bzw. an den zwischen Zellentrennwänden und Gehäuseinnenwand vorhandenen Längsspalten abgedichtet. So werden in der DE-C-3742522 Gleitringe gegen die Seitenscheiben des Zellenradrotors gedrückt, wohingegen die DE-C-3742519 nachstellbare Dichtleisten an den Zellenradstegen beschreibt. Die DE-A-4008407 kombiniert beide Dichtungssysteme und stellt durch geeignete Ausbildung der Dichtungsglieder und eine entsprechende Regelung des Drucks dieser Dichtungsglieder an die Dichtungsflächen eine auch über längeren Betrieb konstante Dichtungssituation her.

Trotzdem kommt es auch bei bester Abdichtung zu Leckluftströmungen, die entgegen der Förderrichtung wirken. Die Förderung kann instabil werden, die Förderungskapazität und -kontinuität wird dadurch stark beeinträchtigt.

In der DE-A-3711084 werden in den Einlaufbereich des Schleusengehäuses hineinragende Vorsprünge beschrieben, die als Abführkanäle für die Pump- und/oder Leckluft dienen, wodurch zwar das die Einschüttung behindernde Zurückströmen von Leckluft in den Einlaufbereich unterbunden wird, die Tatsache der verminderten bzw. auch nicht zu kontrollierenden Förderleistung aber bestehen bleibt.

Werden nämlich die Leckluftverluste zu gross, so sinkt die in der Förderleitung zur Verfügung stehende Förderluftmenge, wodurch der Druck in der Förderleitung weiter steigt. Damit aber erhöht sich der Leckluftanteil weiter, d.h. das System als ganzes wird instabil, es neigt zur Verstopfung.

In der US-A-4059310 ist eine Vorrichtung und ein Verfahren zur gleichmässigen Förderung von pulverförmigem Schüttgut mittels eines Fördermediums offenbart. Um eine gleichmässige Fördergeschwindigkeit zu erzielen, ist die Drehzahl einer das pulverförmige Schüttgut fördernde Pumpe über eine Druckmessung regelbar.

Eine weitere pneumatische Förderanlage beschreibt die DE-A-1950055. Die Regelung des Durchsatzes erfolgt über eine Druckmessung in der Leitung des Fördermediums und nicht über eine Druckmessung in der Förderleitung.

Die Erfindung liegt die Aufgabe zugrunde, die Förderung über Zellenradschleusen auch bei auftretenden Leckluftströmungen stabil zu halten, was durch die Verwirklichung des kennzeichnenden Merkmals des Anspruchs 1 bzw. 2 gelingt.

Vorteilhafte Weiterbildungen werden in den anderen Ansprüchen beschrieben.

Das Auftreten von Leckluft macht sich durch Abnahme der Geschwindigkeit des Fördermediums in der Förderleitung bemerkbar. Wird daher der Druck in der Förderleitung nahe dem Auslaufbereich der Zellenradschleuse gemessen und mit dem Druck im Einlaufbereich des Zellenrades verglichen, so dient diese Druckdifferenz als Regelgrösse, die trotz auftretender störender Leckluftverluste auf einen gewünschten Druckdifferenz-Wert als Führungsgrösse gehalten werden soll. Das geschieht entweder über den Durchsatz von Fördermedium oder über den Durchsatz von Schüttgut als Stellgrösse. So wird über einen Regler entweder ein Ventil an einer pneumatischen Leitung in die Förderleitung angesteuert, oder ein drehzahlvariabler Antrieb für den Rotor des Zellenrades. Ueber das angesteuerte Ventil kann entweder die Fördermediumszufuhr insgesamt in die Förderleitung beeinflusst werden, oder auch nur ein dem Leckluftverlust entsprechender Zusatz an Fördermedium in einer - von der Fördermediumsleitung unabhängigen - zweiten Leitung in die Förderleitung. Diese letztere Variante hat den Vorteil, dass ein Ventil mit kleinerem Steuerbereich eingesetzt werden kann, als im Fall der Steuerung über den gesamten Fördermediumsdurchsatz.

Rohrkrümmer in Förderleitungen werden beispielsweise als Dehnungsausgleicher eingesetzt, oder sie dienen, wie beispielsweise für die in der GB-PS-1066152 beschriebene Flugförderung, zur lokalen Trennung von Fördergut und Fördermedium, um an diesen Stellen Fördermedium allein abziehen zu können. Die Ausbildung einer siphonförmigen Krümmung in der Förderleitung anschliessend an die Einmündung der Fördermediumsleitung in dieselbe begünstigt bei einem pulsierend arbeitenden Pfropfenförderungssystem die Bildung von Gutpfropfen, da die Fördermediumsgeschwindigkeit kleiner ist als die Schwebegeschwindigkeit des Schüttguts.

Die Erfindung wird im folgenden anhand der Zeichnungen beispielhaft beschrieben. Es zeigen
- Fig. 1: eine schematische Darstellung einer Zellenradschleuse mit Förderleitung und Förderluftregelung;
- Fig. 2: eine schematische Darstellung entsprechend Fig. 1 mit Leckluftausgleichsregelung;

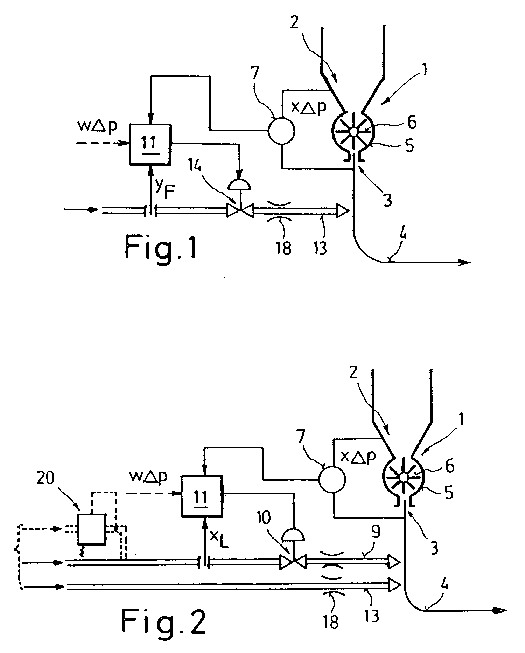

Fig. 1 zeigt eine Zellenradschleuse 1 mit einer Einlauföffnung 2 für das beispielsweise aus einem Silo einzuspeisende Schüttgut.

Eine Auslassöffnung 3 mündet - gegebenenfalls über ein Sendegefäss - in eine Förderleitung 4, in die eine Förderdüse 18, gegebenenfalls pulsierend für Pfropfenförderung, Fördermedium einbringt. Diese Förderdüse 18 ist in bekannter Weise an eine pneumatische Leitung 13 mit Druckregler angeschlossen und ist im allgemeinen von einer Lavaldüse gebildet. Die Zellenradschleuse 1 besteht im wesentlichen aus einem zylindrischen Gehäuse 5, in dem ein Zellenrad um eine mit Stegen 6 versehene Rotorwelle drehbar gelagert ist. Die Stege 6 sind jeweils stirnseitig durch Seitenscheiben verbunden. Wie bereits oben dargestellt, wird auch durch eine Entsprechende radiale und axiale Abdichtung an den Zellenradstegen bzw. am Umfang der Seitenscheiben eine entgegen der Einlauf- und Förderrichtung des Schüttguts wirksam werdende Leckluftströmung nicht völlig unterbunden. Diese Leckluftströmung macht sich durch Druckverluste bemerkbar und hat eine instabile Förderung in der Forderleitung 4 zur Folge.

Deshalb wird nun, entsprechend der Fig. 1, sowohl im Bereich der Einlauföffnung 2 der Zellenradschleuse 1 als auch an der Förderleitung 4 im Bereich der Auslauföffnung 3 der Zellenradschleuse 1 der Druck gemessen, und es werden die beiden Werte miteinander verglichen. Zeigt sich eine Veränderung der gemessenen Druckwerte in der Weise, dass der Druck im Bereich der Auslauföffnung 3 steigt, so ist das eine Folge von Leckluft. Um dem entgegen zu wirken, wird über eine geeignete Regelung der Menge des Fördermediums auslaufseitig eingestellt.

Zeigt der Differenzdruckmesser 7 einen verminderten Differenzdruck, so steht in der Förderleitung 4 aufgrund verringerter Leckluftverluste (Anlaufphase) zu viel Fördermedium zur Verfügung. Ein Regler 11 stellt in Abhängigkeit von dem verminderten Druck in der Förderleitung 4 den Druck des Fördermediums ein. Der Regler 11 misst dazu die Fördermediumszufuhr y_{F} und stellt an der Druckleitung 13 ein Ventil 14 so ein, dass der vorgegebene Sollwert w^p für den Differenzdruck erreicht wird.

Die in Fig. 2 dargestellte Variante zur Regelung des Drucks für das Fördermedium sieht auslaufseitig neben der Zuleitung 13 für das Fördermedium eine davon getrennte Leitung 9 vor. Der aufgrund der Leckluftverluste notwendige Zusatz von Fördermedium geschieht hier über die von der Fördermediumsleitung 13 unabhängigen Leitung 9, da dazu im allgemeinen nur ein geringerer Druck aufgebracht werden muss. Analog zu dem Regelvorgang der Fig. 1 misst der Regler 11 die Zufuhr an Fördermedium x_{L} und stellt an der Druckleitung 9 das Ventil 10 so ein, dass der vorgegebene Sollwert wp̂ für den Differenzdruck erreicht wird. Beide Leitungen 13 und 9 könnten von der gleichen Druckguelle gespeist werden, wobei dann ein Druckregelventil 20 (strichliert) den Druck in der nachgeschalteten Leitung 9 konstant niedrig hält. Um aber in jedem Fall eine mögliche gegenseitige Beeinflussung des Drucks in den beiden Leitungen 9 und 13 auszuschliessen, sind zwei von einander unabhängigen Druckquellen für die beiden Leitungen 9 und 13 vorzuziehen.

In den meisten Fällen wird auf eine Messung im Bereich der Einlassöffnung der Zellenradschleuse verzichtet werden können, da dort - bei Schüttgutförderung - im allgemeinen Atmosphärendruck herrscht. Es genügt somit eine einzige Messstelle im Auslaufbereich der Zellenradschleuse; der dort gemessene Druck dient dann als Regelgrösse, der über den Regler und entsprechende Ventile bzw. einen drehzahlvariablen Antrieb auf einen vorgegebenen. Solldruck wp eingestellt wird.

## Patentansprüche

1. Verfahren zum kontinuierlichen, insbesondere portionenweisen, Fördern von Schüttgut, bei dem das Schüttgut mittels eines Fördermediums aus einem Aufgabebehälter über ein vorzugsweise als Zellenrad (1) ausgebildetes Schleusenorgan in eine Förderleitung (4) gespeist wird, in die zum gegebenenfalls intermittierenden Beaufschlagen mit Fördermedium eine pneumatische Leitung (13) mündet, wobei das Verhältnis des Durchsatzes von Schüttgut und Fördermedium in der Förderleitung (4) konstant gehalten wird, **dadurch gekennzeichnet,** dass das Konstanthalten des Verhältnisses des Durchsatzes von Schüttgut und Fördermedium durch Regeln des Durchsatzes am Fördermedium als Stellgrösse über den Druck an der Förderleitung (4) im Bereich der Auslassöffnung (3) des Schleusenorgans (1) oder über den Differenzdruck zwischen der Förderleitung (4) im Bereich der Auslauföffnung (3) des Schleusenorgans (1) und der Einlassöffnung (2) des Schleusenorgans als Regelgrösse erfolgt.

2. Vorrichtung zur Durchführung des Verfahrens nach einem der vorhergehenden Ansprüche mit einem in eine Förderleitung (4) über ein - vorzugsweise als Zellenrad (1) ausgebildetes - Schleusenorgan mündenden Aufgabebehälter, wobei eine pneumatische Leitung (13) in die Förderleitung (4) mündet, die zum - vorzugsweise intermittierenden - Beaufschlagen der Förderleitung (4) mit Fördermedium vorgesehen ist, und ein Druckmessgerät vorhanden ist, dadurch gekennzeichnet, dass ein Druckmessgerät - vorzugsweise ein Differenzdruckmesser (7) - mit einer Messstelle an der Förderleitung (4) - und gegebenenfalls einer zweiten Messstelle, insbesondere zur Bildung des Differenzdruckes, im Einlaufbereich (2) des Schleusenorgans (1) - mit einem Regler (11) zur Einstellung der Fördermediummenge verbunden ist.

3. Vorrichtung nach Anspruch 2, dadurch gekennzeichnet, dass der Regler (11) ein Ventil (14; 10) in der pneumatischen Leitung (13) und/oder in einer zweiten, parallel zur ersten pneumatischen Leitung (13) in die Förderleitung (4) mündenden Leitung (9) ansteuert.

## Claims

1. Method for the continuous, especially batchwise, conveying of bulk material, wherein the bulk material is fed by means of a conveying medium from a feed container via an exclusion valve, constructed preferably as a compartmented wheel (1), into a conveying conduit (4) into which a pneumatic conduit (13) opens for possibly intermittent introduction of conveying medium, the ratio of the throughput of bulk material and conveying medium in the conveying conduit (4) being kept constant, characterised in that keeping constant the ratio of the throughputs of bulk material and conveying medium is effected by regulating the throughput of conveying medium as a correction variable via the pressure at the conveying conduit (4) in the region of the outlet aperture (3) of the exclusion valve (1) or via the differential pressure between the conveying conduit (4) in the region of the outlet aperture (3) of the exclusion valve (1) and the inlet aperture (2) of the exclusion valve as a controlled variable.

2. Apparatus for carrying out the method according to one of the preceding claims, with a feed container opening into a conveying conduit (4) via an exclusion valve - constructed preferably as a compartmented wheel (1) - , a pneumatic conduit (13) opening into the conveying conduit (4) and being provided for the - preferably intermittent - supplying of the conveying conduit (4) with conveying medium, and a pressure-measuring device is provided, characterised in that a pressure-measuring device - preferably a differential pressure meter (7) - with a measuring point at the conveying conduit (4) - and possibly a second measuring point, especially for forming the differential pressure, in the inlet region (2) of the exclusion valve (1) - is connected with a controller (11) for adjusting the quantity of conveying medium.

3. Apparatus according to claim 2, characterised in that the controller (11) operates a valve (14; 10) in the pneumatic conduit (13) and/or in a second conduit (9) opening into the conveying conduit (4) in parallel with the first pneumatic conduit (13).

## Revendications

1. Dispositif de transport en continu de matière en vrac, en particulier se présentant sous forme de portions, dans lequel la matière en vrac est alimentée au moyen d'un fluide transport, depuis un récipient d'alimentation par l'intermédiaire d'un organe à fonction d'écluse, réalisé de préférence sous forme de roue cellulaire (1), et introduit dans une conduite de transport (4), dans laquelle débouche une conduite pneumatique (13), alimentée, le cas échéant, de façon intermittente avec du milieu de transport, le rapport entre les débits de la matière en vrac et du milieu de transport dans la conduite de transport (4) étant maintenu constant, caractérisé en ce que le maintien à une valeur constante du rapport entre le débit de matière en vrac et du milieu de transport s'effectue par un réglage du débit du milieu de transport, considéré comme grandeur de réglage, par l'intermédiaire de la pression agissant sur l'organe de transport (4) dans la zone de l'ouverture d'évacuation (3) de l'organe à fonction de sas (1) , ou bien par l'intermédiaire de la pression différentielle entre la conduite de transport (4) , dans la zone de l'ouverture d'évacuation (3) de l'organe à fonction de sas (1) et l'ouverture d'introduction (2) de l'organe à fonction de sas, à titre de grandeur de réglage.

2. Dispositif pour mettre en oeuvre le procédé selon la revendication précédente, avec un récipient d'alimentation débouchant dans une conduite de transport (4) par l'intermédiaire d'un organe à fonction de sas - réalisé de préférence sous forme de roue cellulaire (1) -, une conduite pneumatique (13) débouchant dans la conduite de transport (14) et une alimentation - de préférence - de la conduite de transport (4) avec du milieu de transport étant prévues, un appareil de mesure de pression étant installé, caractérisé en ce qu'un appareil de mesure de pression - de préférence un capteur de pression différentielle (7) - avec un point de mesure sur la conduite de transport (4) - et, le cas échéant, un deuxième point de mesure, en particulier pour former la pression différentielle, est relié, dans la zone d'entrée (2) de l'organe formant sas (1), à un régulateur (11) destiné à régler le débit de milieu de transport.

3. Dispositif selon la revendication 2, caractérisé en ce que le régulateur (11) commande une soupape (14; 10) montée dans la conduite pneumatique (13) et/ou dans une deuxième conduite (9) parallèle à la première conduite pneumatique (13) et débouchant dans la conduite de transport (4).
